# FASCICULE DE BREVET EUROPEEN

(11) **EP 3 000 721 B1**
(45) Date de publication et mention de la délivrance du brevet: **25.07.2018**
(21) Numéro de dépôt: 15184221.8
(22) Date de dépôt: 08.09.2015
(51) Int. Cl.: B64C 1/14, B64C 1/32

(54) **AÉRONEF COMPORTANT UNE TRAPPE ET UN DISPOSITIF ANTICHUTE**
LUFTFAHRZEUG, DAS EINE KLAPPE UND EINE FALLSCHUTZVORRICHTUNG UMFASST
AIRCRAFT COMPRISING A FLAP AND A FALL-PREVENTION DEVICE

(30) Priorité: 29.09.2014 FR 1459218
(43) Date de publication de la demande: 30.03.2016
(73) Titulaire: AIRBUS OPERATIONS (S.A.S), 31060 Toulouse (FR)
(72) Inventeur: CHOURREAU, Yannick, 31140 MONTBERON (FR); CHALLANCIN, Loïc, 31400 TOULOUSE (FR)
(74) Mandataire: Gicquel, Olivier Yves Gérard

(56) Documents cités:
- EP-A1- 2 439 135
- EP-A2- 0 261 329
- US-B2- 8 328 137

## Description

La présente invention concerne un aéronef comportant une trappe structurelle associée à un capot d'habillage et au moins un dispositif antichute empêchant la chute du capot d'habillage, ainsi qu'un tel dispositif antichute.

Actuellement, en cas d'incident, pour accéder à l'intérieur du cockpit d'un aéronef, lorsque la porte du cockpit ne peut pas être ouverte, il est prévu une trappe structurelle disposée en partie haute du cockpit. Cette trappe structurelle est associée à un capot d'habillage.

L'aéronef comporte des moyens de verrouillage qui maintiennent le capot d'habillage en position fermée et fixé à la structure de l'aéronef et des moyens d'actionnement (par exemple, un bras fixé sur un côté de la trappe structurelle) associés à la trappe structurelle et qui exercent une pression sur les moyens de verrouillage. Lorsque la trappe structurelle doit être ouverte, les moyens de verrouillage sont déverrouillés depuis l'intérieur ou l'extérieur et le capot d'habillage n'est plus fixé à la structure de l'aéronef.

Ainsi, lorsque la trappe structurelle passe en position ouverte, le capot d'habillage tombe à l'intérieur du cockpit au risque d'atteindre les personnes présentes dans le cockpit.

Le document EP0261329 décrit un dispositif d'ouverture de porte d'évacuation d'urgence depuis une cabine d'aéronef. Un tel dispositif comprend notamment deux organes expansibles permettant de contrôler l'ouverture et la rotation de la porte d'évacuation avant que celle-ci soit totalement séparée de l'aéronef. Le dispositif d'ouverture ainsi décrit n'est actionnable que depuis l'intérieur de la cabine d'aéronef et ne permet pas de réutiliser la porte d'évacuation.

Un objet de la présente invention est de proposer un aéronef comportant un dispositif antichute qui évite que le capot d'habillage libéré tombe sur les personnes présentes sous ledit capot d'habillage.

A cet effet, est proposé un aéronef comportant :
- une structure présentant un toit percé d'une ouverture,
- un capot d'habillage, et
- des moyens de verrouillage prévus pour prendre alternativement une position de verrouillage dans laquelle ils maintiennent le capot d'habillage en position fermée dans l'ouverture, ou une position déverrouillée dans laquelle ils ne maintiennent pas le capot d'habillage, et
- au moins un dispositif antichute prévu pour, lorsque les moyens de verrouillage passent en position déverrouillée, être dans une première position dans laquelle il autorise le déplacement, sous l'effet de la pesanteur, du capot d'habillage de sa position fermée jusqu'à une position intermédiaire où le capot d'habillage est suspendu à la structure à l'intérieur de l'aéronef, et, puis pour passer de la première position à une deuxième position au cours de laquelle, le capot d'habillage passe de la position intermédiaire à une position dégagée dans laquelle il n'est plus lié à la structure.

Un aéronef ainsi équipé d'un tel dispositif antichute permet d'arrêter la chute du capot d'habillage avant qu'il puisse être totalement retiré.

Avantageusement, le passage de la première position à la deuxième position s'effectue sous l'action d'une force non colinéaire à la pesanteur.

Avantageusement, la force extérieure est sensiblement perpendiculaire à la direction de la pesanteur. Chaque dispositif antichute comporte:
- un sabot fixé à la structure,
- un bras rigide présentant une première extrémité solidaire du sabot et s'étendant à partir du sabot selon une direction sensiblement perpendiculaire à la pesanteur,
- une première bande d'accrochage fixée sur une première face du bras rigide,
- une deuxième bande d'accrochage fixée sur une deuxième face du bras rigide opposée à la première face, la longueur de la deuxième bande d'accrochage est telle qu'elle peut par pliage autour d'une deuxième extrémité, appelée extrémité libre, du bras se replier sur la première bande d'accrochage pour s'y fixer de manière amovible le long d'une surface de jonction, et
- un lien souple comportant, à l'une de ses extrémités, un premier anneau prévu pour être fixé au bras dans le pli de la deuxième bande d'accrochage et, à l'autre de ses extrémités, un deuxième anneau prévu pour se fixer au capot d'habillage.

Avantageusement, la première bande d'accrochage ne s'étend pas jusqu'à l'extrémité libre du bras et le premier anneau se positionne au niveau de la zone dépourvue de bande d'accrochage.

Avantageusement, les moyens de fixation constituent un unique ensemble de fixation qui traverse le bras rigide.

L'invention propose également un dispositif antichute prévu pour être mis en oeuvre dans un aéronef selon l'une des variantes précédentes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un aéronef selon l'invention,
la Fig. 2 montre un capot d'habillage et des dispositifs antichute selon l'invention,
les Figs. 3a-c montrent les différentes étapes de libération du capot d'habillage,
la Fig. 4a est une vue d'un dispositif antichute,
la Fig. 4b est une vue du dispositif antichute de la Fig. 4a vue de l'autre côté, et
la Fig. 5 est un agrandissement de la Fig. 2.

Dans la description qui suit, les termes relatifs à une position sont pris en référence à un aéronef en position normale de fonctionnement.

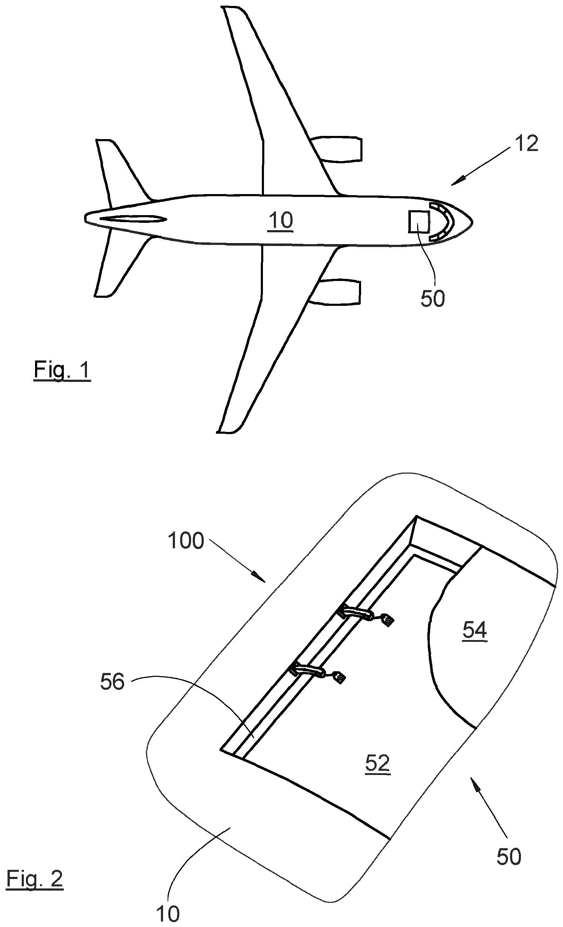

La Fig. 1 montre un aéronef 10 dont la structure présente un toit percé d'une ouverture (56, Fig. 2) au dessus d'un cockpit 12. L'aéronef 10 présente également une trappe structurelle (non représentée) et un capot d'habillage 50 qui obturent l'ouverture 56. Classiquement, la trappe structurelle est accessible directement depuis l'extérieur de l'aéronef 10 et permet d'atteindre le capot d'habillage 50 présent sur le toit du cockpit 12 afin de l'ouvrir et de pénétrer dans le cockpit 12.

Dans le reste de la description, le capot d'habillage 50 est disposé sur le toit du cockpit 12, et aligné sur la trappe structurelle (où que soit située cette dernière sur l'aéronef 10).

La Fig. 2 montre la face intérieure 52 du capot d'habillage 50, c'est-à-dire celle qui est tournée vers l'intérieur du cockpit 12, tandis que la face extérieure 54, c'est-à-dire celle qui est orientée vers l'extérieur de l'aéronef 10, a été partiellement retirée pour faciliter la compréhension de la Fig. 2.

Conformément au capot d'habillage de l'état de la technique, l'aéronef 10 comporte des moyens de verrouillage prévus pour prendre alternativement une position de verrouillage dans laquelle ils maintiennent le capot d'habillage 50 en position fermée dans l'ouverture 56, ou une position déverrouillée dans laquelle ils ne maintiennent pas le capot d'habillage 50 qui est alors libre de se déplacer.

En position de verrouillage, les moyens de verrouillage qui ne sont pas représentés, verrouillent le capot d'habillage 50 sur la structure de l'aéronef 10.

Lorsque les moyens de verrouillage sont déverrouillés, le capot d'habillage 50 se déplace sous son propre poids selon la direction de la pesanteur, c'est-à-dire ici sensiblement perpendiculaire au plan de l'ouverture 56 jusqu'à une position intermédiaire dans laquelle le capot d'habillage 50 est suspendu à la structure de l'aéronef 10 par des dispositifs antichute 100 (dont deux sont visibles sur la Fig. 2).

Lorsque les moyens de verrouillage passent en position déverrouillée, chaque dispositif antichute 100 est dans une première position dans laquelle il autorise le déplacement, sous l'effet de la pesanteur, du capot d'habillage 50 de sa position fermée jusqu'à la position intermédiaire où le capot d'habillage 50 est suspendue à la structure de l'aéronef 10 par l'intermédiaire des dispositifs antichute 100. Dans cette position intermédiaire, le cockpit 12 est accessible depuis l'extérieur de l'aéronef 10.

Puis chaque dispositif antichute 100 passe de la première position à une deuxième position au cours de laquelle le capot d'habillage 50 passe de la position intermédiaire à une position dégagée dans laquelle il n'est plus lié à la structure de l'aéronef 10.

Le passage de la première position à la deuxième position s'effectue sous l'action d'une force non colinéaire à la pesanteur.

Chaque dispositif antichute 100 limite ainsi le déplacement du capot d'habillage 50 selon la direction de la pesanteur jusqu'à la position intermédiaire où le capot d'habillage 50 est suspendu et donc évite sa chute dans le cockpit 12. Puis sous l'action d'une force extérieure, classiquement l'action d'une personne placée dans le cockpit 12, chaque dispositif antichute 100 passe dans la deuxième position où le capot d'habillage 50 est libéré et peut être dégagé de l'ouverture 56.

De préférence, la force extérieure est sensiblement perpendiculaire à la direction de la pesanteur. Il s'agit par exemple d'une traction horizontale exercée par le personnel présent dans le cockpit 12 sur le capot d'habillage 50 suspendu en position intermédiaire. Ainsi, le personnel maintient le capot d'habillage 50 durant la dernière phase de libération et peut donc la diriger sans risque de chute de celle-ci.

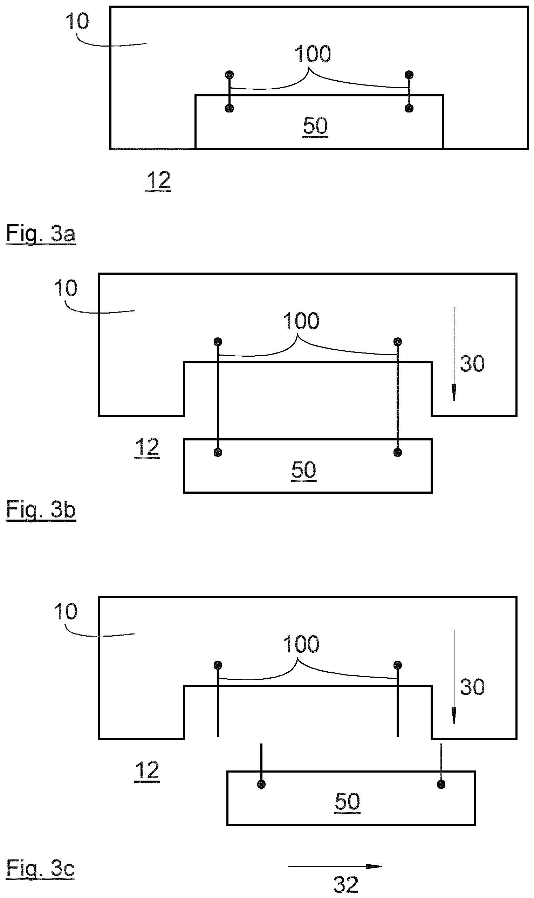

Les Figs. 3a-c montrent les différentes étapes de libération du capot d'habillage 50.

Sur la Fig. 3a, le capot d'habillage 50 est en position fermée et maintenue par les moyens de verrouillage.

Sur la Fig. 3b, les moyens de verrouillage sont déverrouillés et le capot d'habillage 50 tombe en position intermédiaire sous l'effet de la pesanteur 30 et est maintenue dans cette position intermédiaire par les dispositifs antichute 100 qui sont en première position.

Sur la Fig. 3c, la force extérieure 32 entraîne le passage de chaque dispositif antichute 100 en deuxième position et le capot d'habillage 50 passe alors en position dégagée par rupture de la liaison l'unissant à la structure de l'aéronef 10.

La longueur de suspension est de l'ordre de 10 cm.

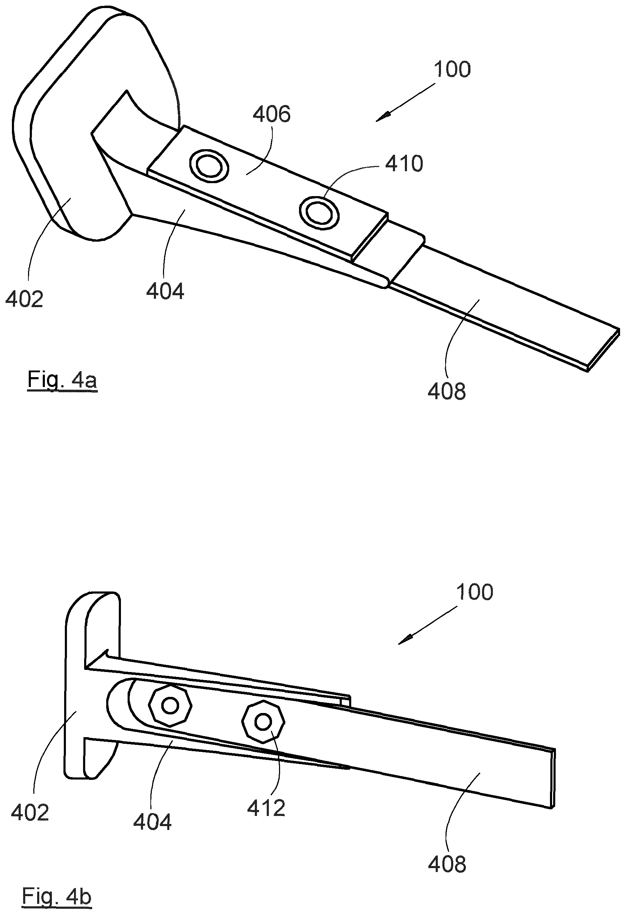

La Fig. 4a et la Fig. 4b montrent un dispositif antichute 100 qui comporte un sabot 402 prévu pour être fixé à la structure de l'aéronef 10, et un bras rigide 404. Le bras rigide 404 présente une première extrémité solidaire du sabot 402 et s'étend à partir du sabot 402 selon une direction sensiblement perpendiculaire à la pesanteur 30, c'est-à-dire ici sensiblement parallèlement au plan de l'ouverture 56.

Le dispositif antichute 100 comporte également une première bande d'accrochage 406 fixée sur une première face du bras rigide 404.

Selon un mode de réalisation particulier, la bande d'accrochage 406 est collée sur le bras rigide 404. Selon un autre mode de réalisation particulier, la première bande d'accrochage 406 est fixée sur le bras rigide par des moyens de fixation 410, tels que des rivets ou des vis.

Le dispositif antichute 100 comporte également une deuxième bande d'accrochage 408 fixée sur une deuxième face du bras rigide 404 opposée à la première face, et la longueur de la deuxième bande d'accrochage 408 est telle qu'elle peut par pliage autour d'une deuxième extrémité, appelée extrémité libre, du bras 404 se replier sur la première bande d'accrochage 406 pour s'y fixer le long d'une surface de jonction.

Selon un mode de réalisation particulier, la deuxième bande d'accrochage 408 est collée sur le bras rigide. Selon un autre mode de réalisation particulier, la deuxième bande d'accrochage 408 est fixée sur le bras rigide par des moyens de fixation 412, tels que des rivets ou des vis.

Afin que la fixation de la première bande d'accrochage 406 et la fixation de la deuxième bande d'accrochage 408 sur le bras rigide 404 se fassent de manière rapide, les moyens de fixation 410 et 412 constituent un unique ensemble de fixation qui traverse le bras rigide 404, et ainsi la fixation des bandes d'accrochage 406 et 408 s'effectue simultanément. L'ensemble de fixation ainsi défini est par exemple un système de rivet traversant le bras rigide 404 ou un système vis-écrou.

Avantageusement, le dispositif antichute 100 est fixé sur la structure de l'aéronef 10 de sorte que la deuxième face du bras rigide 404 sur laquelle est fixée la deuxième bande d'accrochage 408 est orientée vers le plancher du cockpit 12 et que la première face du bras rigide 404 sur laquelle est fixée la première bande d'accrochage 406 est orientée du côté opposé au plancher.

Les deux bandes d'accrochage 406 et 408 sont prévues pour s'accrocher l'une avec l'autre de manière amovible, c'est-à-dire qu'elles peuvent se séparer sous l'action d'une force extérieure.

Les bandes d'accrochage 406 et 408 sont de préférence des bandes auto-agrippantes complémentaires, par exemple en velcro®.

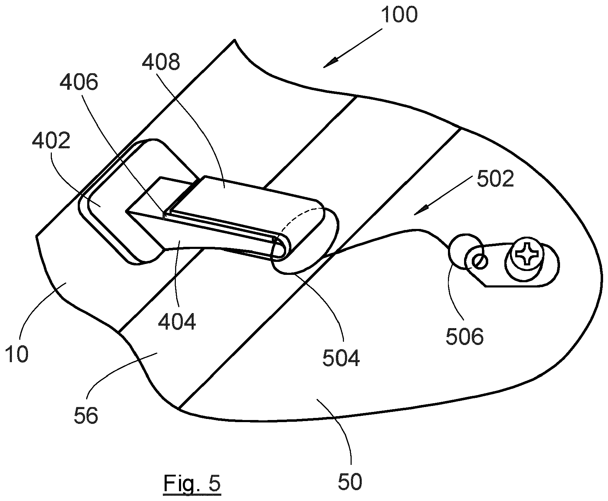

Le dispositif antichute 100 comporte également un lien souple (502, Fig. 5) qui comporte, à l'une de ses extrémités, un premier anneau 504 prévu pour être fixé au bras 404 dans le pli de la deuxième bande d'accrochage 408 et, à l'autre de ses extrémités, un deuxième anneau 506 prévu pour se fixer au capot d'habillage 50.

Dans la première position, les deux bandes d'accrochage 406 et 408 sont en prises et dans la deuxième position, les deux bandes d'accrochage 406 et 408 sont disjointes.

La Fig. 5 montre le dispositif antichute 100 en première position. Le premier anneau 504 est fixé au bras 404 du fait qu'il est pris dans le pli de la deuxième bande d'accrochage 408 entre le bras 404 et ladite deuxième bande d'accrochage 408.

Le deuxième anneau 506 est fixé au capot d'habillage 50 ici par une vis de fixation.

Lorsque le capot d'habillage 50 passe dans la position intermédiaire, le lien 502 se tend et le premier anneau 504 vient reposer sur l'extrémité libre du bras 404 qui supporte les efforts de pesanteur.

Lorsque le capot d'habillage 50 est tiré par une personne présente dans le cockpit 12, la force s'exerce sensiblement parallèlement à la surface de jonction et les deux bandes d'accrochage 406 et 408 se séparent alors pour libérer le premier anneau 504.

Pour permettre un bon positionnement du premier anneau 504 au niveau de l'extrémité libre du bras 404, la première bande d'accrochage 406 ne s'étend pas jusqu'à l'extrémité libre du bras 404 et le premier anneau 504 peut alors se positionner au niveau de la zone dépourvue de première bande d'accrochage 406.

## Revendications

1. Aéronef (10) comportant :
- une structure présentant un toit percé d'une ouverture (56),
- un capot d'habillage (50),
- des moyens de verrouillage prévus pour prendre alternativement une position de verrouillage dans laquelle ils maintiennent le capot d'habillage (50) en position fermée dans l'ouverture (56), ou une position déverrouillée dans laquelle ils ne maintiennent pas le capot d'habillage (50), et
- au moins un dispositif antichute (100) prévu pour, lorsque les moyens de verrouillage passent en position déverrouillée, être dans une première position dans laquelle il autorise le déplacement, sous l'effet de la pesanteur, du capot d'habillage (50) de sa position fermée jusqu'à une position intermédiaire où le capot d'habillage (50) est suspendu à la structure à l'intérieur de l'aéronef (10), et, puis pour passer de la première position à une deuxième position au cours de laquelle, le capot d'habillage (50) passe de la position intermédiaire à une position dégagée dans laquelle il n'est plus lié à la structure, l'aéronef étant **caractérisé en ce que** chaque dispositif anti-chute (100) comporte :
- un sabot (402) fixé à la structure,
- un bras rigide (404) présentant une première extrémité solidaire du sabot (402) et s'étendant à partir du sabot (402) selon une direction sensiblement perpendiculaire à la pesanteur (30),
- une première bande d'accrochage (406) fixée sur une première face du bras rigide (404),
- une deuxième bande d'accrochage (408) fixée sur une deuxième face du bras rigide (404) opposée à la première face, la longueur de la deuxième bande d'accrochage (408) est telle qu'elle peut par pliage autour d'une deuxième extrémité, appelée extrémité libre, du bras (404) se replier sur la première bande d'accrochage (406) pour s'y fixer de manière amovible le long d'une surface de jonction, et
- un lien souple (502) comportant, à l'une de ses extrémités, un premier anneau (504) prévu pour être fixé au bras (404) dans le pli de la deuxième bande d'accrochage (408) et, à l'autre de ses extrémités, un deuxième anneau (506) prévu pour se fixer au capot d'habillage (50).

2. Aéronef (10) selon la revendication 1, **caractérisé en ce que** la première bande d'accrochage (406) ne s'étend pas jusqu'à l'extrémité libre du bras (404) et **en ce que** le premier anneau (504) se positionne au niveau de la zone dépourvue de bande d'accrochage.

3. Aéronef (10) selon la revendication 1, **caractérisé en ce que** les moyens de fixation (410, 412) constituent un unique ensemble de fixation qui traverse le bras rigide (404).

## Patentansprüche

1. Luftfahrzeug (10), das aufweist:
- eine Struktur, die ein Dach mit einer Öffnung (56) aufweist,
- eine Verkleidungshaube (50),
- Verriegelungseinrichtungen, die vorgesehen sind, um abwechselnd eine Verriegelungsstellung, in der sie die Verkleidungshaube (50) in geschlossener Stellung in der Öffnung (56) halten, oder eine Entriegelungsstellung einzunehmen, in der sie die Verkleidungshaube (50) nicht halten, und
- mindestens eine Absturzsicherungsvorrichtung (100), die vorgesehen ist, um, wenn die Verriegelungseinrichtungen in die entriegelte Stellung übergehen, in einer ersten Stellung zu sein, in der sie die Verschiebung, unter der Wirkung der Schwerkraft, der Verkleidungshaube (50) von ihrer geschlossenen Stellung bis in eine Zwischenstellung erlaubt, in der die Verkleidungshaube (50) an der Struktur im Inneren des Luftfahrzeugs (10) aufgehängt ist, und um dann von der ersten Stellung in eine zweite Stellung überzugehen, während der die Verkleidungshaube (50) von der Zwischenstellung in eine gelöste Stellung übergeht, in der sie nicht mehr mit der Struktur verbunden ist, wobei das Luftfahrzeug **dadurch gekennzeichnet ist, dass** jede Absturzsicherungsvorrichtung (100) aufweist:
- einen an der Struktur befestigen Fuß (402),
- einen steifen Arm (404), der ein fest mit dem Fuß (402) verbundenes und sich ausgehend vom Fuß (402) in einer Richtung im Wesentlichen lotrecht zur Schwerkraft (30) erstreckendes Ende hat,
- einen ersten Haltestreifen (406), der an einer ersten Seite des steifen Arms (404) befestigt ist,
- einen zweiten Haltestreifen (408), der an einer zweiten Seite des steifen Arms (404) entgegengesetzt zur ersten Seite befestigt ist, wobei die Länge des zweiten Haltestreifens (408) derart ist, dass sie sich durch Biegen um ein zweites Ende, freies Ende genannt, des Arms (404) auf den ersten Haltestreifen (406) umbiegen kann, um dort lösbar entlang einer Verbindungsfläche befestigt zu werden, und
- ein biegsames Band (502), das an einem seiner Enden einen ersten Ring (504), der vorgesehen ist, am Arm (404) in der Biegung des zweiten Haltestreifens (408) befestigt zu werden, und am anderen seiner Enden einen zweiten Ring (506) aufweist, der vorgesehen ist, an der Verkleidungshaube (50) befestigt zu werden.

2. Luftfahrzeug (10) nach Anspruch 1, **dadurch gekennzeichnet, dass** der erste Haltestreifen (406) sich nicht bis zum freien Ende des Arms (404) erstreckt, und dass der erste Ring (504) im Bereich der keinen Haltestreifen aufweisenden Zone positioniert wird.

3. Luftfahrzeug (10) nach Anspruch 1, **dadurch gekennzeichnet, dass** die Befestigungseinrichtungen (410, 412) eine einzige Befestigungseinheit bilden, die den steifen Arm (404) durchquert.

## Claims

1. Aircraft (10) comprising:
- a structure exhibiting a roof pierced with an opening (56),
- a cover plate (50),
- locking means provided to adopt a locking position in which they hold the cover plate (50) in the closed position in the opening (56) or, alternatively, an unlocked position in which they do not hold the cover plate (50), and
- at least one fall-protection device (100) provided so that when the locking means move into the unlocked position it is in a first position in which it allows movement of the cover plate (50) under the influence of gravity from its closed position to an intermediate position in which the cover plate (50) is suspended from the structure inside the aircraft (10) and then moves from the first position into a second position during the course of which the cover plate (50) moves from the intermediate position into an open position in which it is no longer attached to the structure, the aircraft being **characterized in that** each fall-protection device (100) comprises:
- a shoe (402) fixed to the structure,
- a rigid arm (404) exhibiting a first end integral with the shoe (402) and extending from the shoe (402) in a direction substantially perpendicular to gravity (30),
- a first strip fastener (406) fixed on a first face of the rigid arm (404),
- a second strip fastener (408) fixed on a second face of the rigid arm (404) opposite the first face, the length of the second strip fastener (408) being such that by bending about a second end, referred to as the free end, of the arm (404), it can be folded on the first strip fastener (406), becoming fixed there in a removable manner along a joining surface, and
- a flexible link (502) comprising at one of its ends a first ring (504) provided to be fixed to the arm (404) in the fold of the second strip fastener (408) and, at the other of its ends, a second ring (506) provided to be fixed to the cover plate (50).

2. Aircraft (10) according to Claim 1, **characterized in that** the first strip fastener (406) does not extend as far as the free end of the arm (404) and the first ring (504) is positioned at the level of the zone free from strip fastener.

3. Aircraft (10) according to Claim 1, **characterized in that** the fixing means (410, 412) constitute a single fixing assembly that passes through the rigid arm (404) .
